(19) Europäisches Patentamt
European Patent Office
Office européen des brevets

(11) **EP 1 524 576 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***G05F 1/70*** (2006.01)     ***H02M 1/00*** (2007.01)

(21) Anmeldenummer: **04021714.3**

(22) Anmeldetag: **13.09.2004**

(54) **Hochsetzsteller mit Leistungsfaktorkorrektur**

Step-up converter with power factor control

Convertisseur de tension survolteur avec régulation de facteur de puissance

(84) Benannte Vertragsstaaten:
**DE FR GB**

(30) Priorität: **16.10.2003 DE 10348210**

(43) Veröffentlichungstag der Anmeldung:
**20.04.2005 Patentblatt 2005/16**

(73) Patentinhaber: **Patent-Treuhand-Gesellschaft für elektrische Glühlampen mbH**
**81543 München (DE)**

(72) Erfinder:
• **Braun, Alois**
**86633 Neuburg (DE)**
• **Limmer, Walter**
**80337 München (DE)**
• **Mühlschlegel, Joachim**
**82194 Gröbenzell (DE)**

(56) Entgegenhaltungen:
**EP-A- 0 979 025**     **WO-A-01/69984**
**DE-A- 10 040 411**     **US-A- 5 757 166**

• **LAZAR J ET AL: "Open loop control of a unity power factor, discontinuous conduction mode boost rectifier" TELECOMMUNICATIONS ENERGY CONFERENCE, 1995. INTELEC '95., 17TH INTERNATIONAL THE HAGUE, NETHERLANDS 29 OCT.-1 NOV. 1995, NEW YORK, NY, USA,IEEE, US, 29. Oktober 1995 (1995-10-29), Seiten 671-676, XP010161310 ISBN: 0-7803-2750-0**

EP 1 524 576 B1

**Beschreibung**

**Technisches Gebiet**

Die vorliegende Erfindung betrifft einen Hochsetzsteller mit Leistungsfaktorkorrektur mit einem Eingang zum Anschluss einer Versorgungsspannung, insbesondere einer gleichgerichteten Wechselspannung, einer Induktivität, einer Diode und einem Speicherkondensator, die in serieller Anordnung zwischen den Eingang und einen Ausgang gekoppelt sind, wobei am Ausgang die am Speicherkondensator abfallende Spannung bereitgestellt wird, einem Schalter, der zwischen einen Verbindungspunkt zwischen Induktivität und Diode einerseits und ein Bezugspotential andererseits gekoppelt ist, und einer Ansteuerschaltung für den Schalter, die die Ein- und Ausschaltdauer des Schalters steuert. Sie betrifft überdies ein Verfahren zum Betreiben eines derartigen Hochsetzstellers sowie ein elektronisches Vorschaltgerät zum Ansteuern mindestens einer elektrischen Lampe mit einem derartigen Hochsetzsteller.

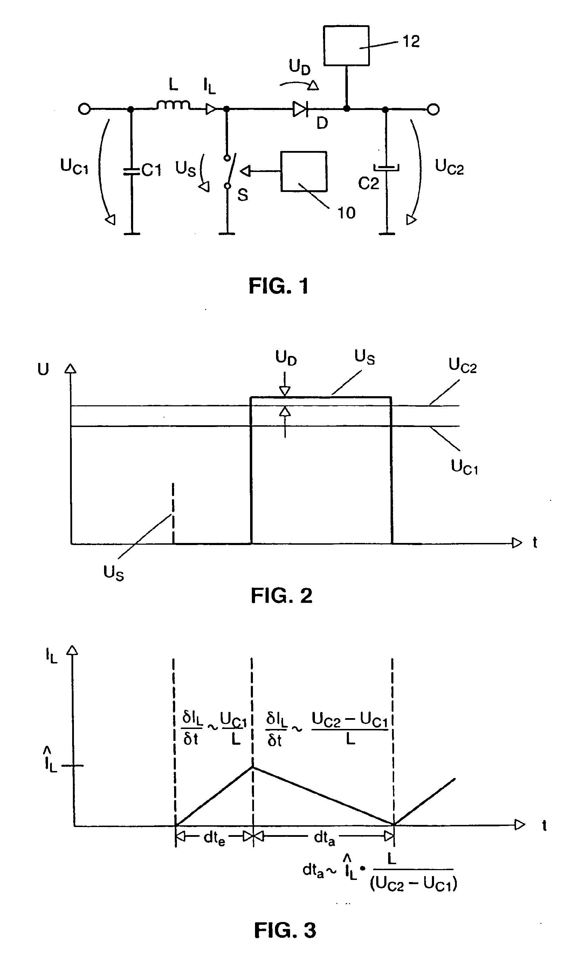

Figur 1 zeigt einen derartigen Hochsetzsteller, dessen prinzipielle Struktur, ohne die Strommessvorrichtung, wie weiter unten noch genauer ausgeführt werden wird, bekannt ist. Eingangsseitig fällt an einem Kondensator C1 eine Spannung $U_{C1}$ ab. Am Ausgang stellt ein Kondensator C2 die Ausgangsspannung $U_{C2}$ bereit. Die am Schalter abfallende Spannung sei $U_S$, die an der Diode abfallende Spannung $U_D$. Der Strom durch die Induktivität sei $I_L$, die Ansteuerschaltung hat die Bezugszahl 10 und eine Strommessvorrichtung zur Messung des Stroms durch die Diode D trägt die Bezugszahl 12.

Zur besseren Verständlichkeit wird die der Erfindung zugrunde liegende Problematik am Beispiel der Ansteuerung von Lampen erörtert. Wie für den Fachmann offensichtlich, lässt sich der erfindungsgemäße Hochsetzsteller jedoch ohne weiteres auch in anderen technischen Bereichen einsetzen.

Bei der Auslegung dieser Schaltungsstruktur sind zwei Prämissen einzuhalten: Zum einen muss die Spannung $U_{C2}$ zu jedem Zeitpunkt t größer sein als die Spannung $U_{C1}$, damit die Leistungsfaktorkorrektur funktioniert. Zweitens, um die Verlustleistung der gesamten Schaltungsanordnung einschließlich der nachfolgenden Schaltung und damit auch die Anforderungen an die beteiligten Bauelemente niedrig zu halten, soll die bereitgestellte Spannung $U_{C2}$ möglichst klein sein.

**Stand der Technik**

Im Stand der Technik wurde nun nur $U_{C2}$ gemessen und im Hinblick darauf die Einschaltdauer $dt_e$ des Schalters geregelt. Bei der Auslegung der Schaltung muss jedoch eine Worst-Case-Auslegung vorgenommen werden, die verschiedene Schwankungsursachen von $U_{C1}$ berücksichtigt. $U_{C1}$ kann sich zum einen als Nennspannung über Ländergrenzen verändern und bei gegebener Nennspannung weiter Toleranzen von bis zu plus/minus 15 Prozent aufweisen. Wird beispielsweise die Nennspannung $U_{C1}$ zu 240 V angenommen, so kann diese Spannung im Netzscheitel 276 V mal Wurzel aus 2, also ungefähr 390 V betragen, eine Auslegung von $U_{C2}$ für diesen Betrieb würde deshalb auf ca. 425 V hinauslaufen. Bei anderer Nennspannung von 230V und ohne auftretende Toleranzen würde $U_{C1}$ im Netzscheitel gleich 230 V mal Wurzel aus 2 = 325 V betragen und eine optimale Auslegung von $U_{C2}$ für diesen Nennbetrieb würde deshalb auf ca. 355 V hinauslaufen. Wie bereits erwähnt, muss hier jedoch bei einer Auslegung ohne Regelung der Worst-Case-Fall von $U_{C1}$ angenommen werden. Da weiterhin die Toleranz der Messung von $U_{C2}$ und die Ripplespannung von $U_{C2}$ berücksichtigt werden müssen, werden im Normalbetrieb daher über 70 V quasi verschenkt.

Die im Dokument DE 10 40 411 A1 gezeigte Lösung besteht darin, $U_{C1}$ und $U_{C2}$ zu messen und die Einschaltdauer $dt_e$ des Schalters S auf ein Minimum der Differenz der beiden Spannungen zu regeln. Da jedoch beide Spannungen zum Bezugspotential gemessen werden, wobei die Differenz sehr klein ausfallen soll, müssen die Toleranzen der Spannungsmessungen berücksichtigt werden. Bei kleinen Differenzen führt dies zu einer Vervielfachung der Toleranz der Differenz. Auch diese Lösung stellt daher keine optimale Schaltungsauslegung zur Verfügung und führt daher noch immer zu einer unerwünscht hohen Verlustleistung mit den sich daraus ergebenden Konsequenzen.

Zum Stand der Technik wird weiterhin verwiesen auf die WO 01/69984 A2.

**Darstellung der Erfindung**

Die Aufgabe der vorliegenden Erfindung besteht deshalb darin, den eingangs genannten Hochsetzsteller bzw. das eingangs genannte Verfahren derart weiterzubilden, dass die in der Schaltungsanordnung umgesetzte Verlustleistung minimiert wird.

Diese Aufgabe wird gelöst durch einen Hochsetzsteller mit den Merkmalen von Patentanspruch 1 und ein Verfahren mit den Merkmalen von Patentanspruch 4.

Die vorliegende Erfindung basiert auf der Erkenntnis, dass die Verlustleistung dann weiter reduziert werden kann, wenn die Ansteuerschaltung für den Schalter ausgelegt ist, die Einschaltdauer des Schalters in Abhängigkeit der Freilaufzeit der Induktivität zu steuern. Damit ergibt sich eine einfache und sehr genaue Möglichkeit, die Spannungsdifferenz zwischen $U_{C2}$ und $U_{C1}$ ohne Toleranzprobleme zu messen. Die aus dem Stand der Technik bekannten Messungenauigkeiten für diese Spannungsdifferenz entfallen, sie lässt sich somit einfach und sicher minimieren.

Die obige Erkenntnis ist gleichbedeutend mit einer Regelung des Hochsetzstellers auf eine maximale Freilaufzeit $dt_a$ während einer Periode der Versorgungsspannung $U_{C1}$, die zu einem Zeitpunkt nahe des Scheitels auftritt. Daraus ergibt sich eine Vielzahl von Vorteilen: Zum einen sinkt die im Hochsetzsteller handzuhabende Blindleistung. Die Arbeitsfrequenz und mit ihr die Schaltverluste im Hochsetzsteller sinken ebenfalls, weiterhin der Einschalt-Duty-Cycle des Schalters S. Bei Realisierung des Schalters S als Transistor sinkt damit dessen Effektivstrom und seine On-Verluste. Da zur Messung der Differenz zwischen $U_{C2}$ und $U_{C1}$ die Toleranzen des Stands der Technik nicht mehr berücksichtigt werden müssen, kann eine geringere Spannung $U_{C2}$ verwendet werden. Mit Bezug auf die Ansteuerung von Lampen ist das gleichbedeutend damit, dass die sogenannte Zwischenkreisspannung reduziert werden kann. Darüber hinaus ergeben sich Vorteile bei der Funkentstörung, da die resultierenden Frequenzanteile im Ausgangssignal aufgrund der reduzierten Schaltfrequenz des Schalters in tiefere Frequenzbereiche rutschen, wo durch die entsprechenden Normen höhere Amplitudenwerte erlaubt sind. Aufgrund der geringeren Frequenz des Stromes durch die Drossel L wird eine kostengünstigere Dimensionierung dieses Bauteils ermöglicht. Infolge des geringeren Stroms durch den Schalttransistor im Schalter S kann auch dieser günstiger realisiert werden. Im Lampenbereich sinkt darüber hinaus die Verlustleistung der nachfolgenden Konverter, zum Beispiel des Buckkonverters bei Hochdruckentladungslampen sowie der Halbbrücke bei Niederdrucklampen. Außerdem lässt sich ein Gerät mit universellem Netzeingang $U_{C1}$ (100 bis 277 V) leichter implementieren.

Bei einer bevorzugten Ausführungsform umfasst die Ansteuerschaltung weiterhin eine Vorrichtung, um den Zeitpunkt zu ermitteln, zu dem der Strom durch die Induktivität den Wert Null erreicht hat. Die Erkennung, wann der Strom durch die Induktivität gleich Null ist, ist gut und mit geringen Toleranzen abtastbar. Eine praktisch kostenneutrale Realisierung eröffnet sich dadurch, dass im digital gesteuerten Schalter die entsprechende PWM (Pulsweitenmodulation) zur Messung der Freilaufzeit herangezogen wird. Anstelle der Erkennung des Stromnulldurchgangs kann auch ausgewertet werden, wann die Änderung des Stroms mit der Zeit von positiv auf negativ übergeht. Die Auswertung mit dem Strom korrelierter Spannung ist selbstverständlich auch möglich. Unabhängig von der genannten digitalen Realisierung sind jedoch auch Ausführungsformen von Vorteil, die auf herkömmlichem analogen Wege die Regelung der Einschaltzeit des Schalters auf eine maximale Freilaufzeit bewerkstelligen. Die angeführten Vorteile bleiben dabei erhalten.

Weitere vorteilhafte Ausführungsformen ergeben sich aus den Unteransprüchen.

## Kurze Beschreibung der Tabellen und Zeichnungen

Im Nachfolgenden wird nunmehr ein Ausführungsbeispiel der Erfindung unter Bezugnahme auf die beigefügten Zeichnungen und Tabellen näher erläutert. Es zeigen:

Fig. 1    in schematischer Darstellung ein Prinzipschaltbild eines erfindungsgemäßen Hochsetzstellers;

Fig. 2    in schematischer Darstellung den zeitlichen Verlauf verschiedener Spannungen der Schaltungsanordnung von Figur 1;

Fig. 3    in schematischer Darstellung den zeitlichen Verlauf des Stroms durch die Induktivität der Schaltungsanordnung von Figur 1;

Fig. 4    das Spektrum der Funkstörwerte nach einem üblich dimensionierten Funkstörfilter gemessen nach EN55015 ohne Verwendung eines erfindungsgemäßen Hochsetzstellers, d.h. bei einer Auslegung nach dem Stand der Technik und bei einer Dimensionierung von $U_{C2}$ auf 387 V; und

Fig. 5    das Spektrum der Funkstörwerte nach einem wie in Figur 4 dimensionierten Funkstörfilter gemessen nach EN55015 bei einer Schaltungsanordnung mit einem erfindungsgemäßen Hochsetzsteller und einer Dimensionierung von $U_{C2}$ auf 350 V.

Tab. 1    in tabellarischer Form den zeitlichen Verlauf verschiedener Größen einer beispielhaft realisierten Schaltung bei einer mittleren Spannung $U_{C2}$ von 355 V;

Tab. 2    in tabellarischer Form den zeitlichen Verlauf verschiedener Größen einer beispielhaft realisierten Schaltung bei einer mittleren Spannung $U_{C2}$ von 387 V;

## Bevorzugte Ausführung der Erfindung

Figur 1 zeigt einen erfindungsgemäßen Hochsetzsteller, wobei die Ansteuerschaltung 10 dazu ausgelegt ist, die Einschaltdauer $dt_e$ des Schalters S in Abhängigkeit der Freilaufzeit der Induktivität L zu steuern. Zur Bestimmung des Zeitpunkts, zu dem der Strom $I_L$ gleich Null ist, wird eine Strommessvorrichtung 12 verwendet. Dabei kann es sich um einen parasitären Schwingkreis handeln. Eine Zusammenschau der Figuren 2 und 3 lässt erkennen, dass zunächst während eines Zeitraums $dt_e$ der Schalter S in Figur 1 geschlossen wird, die am Schalter abfallende Spannung $U_S$ geht daher nahe Null. Während dieser Zeit ist die zeitliche Änderung

des Stroms $\dfrac{\partial I_L}{\partial t} \sim \dfrac{U_{C1}}{L}$. Wird der Schalter geöffnet, gilt $U_S = U_D + U_{C2}$. In Figur 2 lässt sich auch erkennen, dass $U_{C2}$ immer größer ist als $U_{C1}$. Während der Zeit-

dauer $dt_a$, während der Schalter S geöffnet ist, gilt

$$t \quad \frac{\partial I_L}{\partial t} \sim \frac{U_{C2} - U_{C1}}{L}$$ . Umformuliert ergibt sich demnach $dt_a$, d. h. die Ausschaltdauer des Schalters S zu $dt_a$

$$\sim \hat{I}_L \cdot \frac{L}{(U_{C2} - U_{C1})}$$ . Hieraus lässt sich, da $\hat{I}_L$ sowie

der Wert der Induktivität L hinreichend genau bekannt sind, über eine Bestimmung der Freilaufzeit (d. h. $I_L = 0$) die Spannungsdifferenz $U_{C2} - U_{C1}$ direkt ohne Subtraktion zweier toleranzbehafteter Messgrößen ermitteln.

Die letzte Gleichung lässt erkennen, dass ein Minimieren der Spannungsdifferenz $U_{C2} - U_{C1}$ zu sehr langen Abschaltzeiten $dt_a$ des Schalters führt. In der Praxis muss jedoch darauf geachtet werden, dass die Verlängerung der Freilaufzeit nicht zu so niedrigen Schaltfrequenzen führt, die im Hörbereich liegen. In der Praxis werden die Schaltfrequenzen daher bei dem beispielhaft diskutierten Anwendungsbereich im Lampensektor bei ca. 20 bis 50 kHz liegen. Im Hinblick auf Schaltungsverluste wird eine praktische Obergrenze der Schalterfrequenz bei ca. 200 kHz liegen. Die Regelung der Einschaltzeit $dt_e$ in der Ansteuerschaltung 10 ist bevorzugt ausgelegt mit einer Zeitkonstante von 50 bis 500 $\mu$s, bevorzugt 100 $\mu$s.

Tabelle 1 zeigt in tabellarischer Form den zeitlichen Verlauf diverser Größen bei einer Auslegung eines erfindungsgemäßen Hochsetzstellers auf eine mittlere (mean) Spannung $U_{C2}$ von 355 V. Im Vergleich dazu zeigt Tabelle 2 den zeitlichen Verlauf derselben Größen bei einer Auslegung eines erfindungsgemäßen Hochsetzstellers auf eine mittlere (mean) Spannung $U_{C2}$ von 387 V. Auf einige Besonderheiten sei im Nachfolgenden explizit hingewiesen: In Tabelle 1 sinkt die Differenz zwischen $U_{C2}$ und $U_{C1}$ in Schritt n = 11 auf 19 V. Die Ausschaltzeit $dt_a$ ist in diesem Bereich maximal mit 6,23E - 05s. Aufgrund der langsamen Änderung in der Einschaltdauer $dt_e$ des Schalters kann diese in der Darstellung von Tabelle 1 und Tabelle 2 quasi als konstant angesehen werden. Entsprechend ist der Duty-Cycle

$$\frac{dt_e}{dt_e + dt_a}$$ im Schritt n = 11 von Tabelle 1 minimal, nämlich 0,055. Die Schaltfrequenz fs ist im Schritt n = 11 ebenfalls minimal und beträgt ca. 15 kHz. Die maximal auftretende Spannung $U_{C2}$ beträgt 379,7 V.

In Tabelle 2 beträgt die minimale Differenz $U_{C2} - U_{C1}$ 51,8 V bei einer maximalen Ausschaltdauer von $dt_a$ gleich 2,29E - 05s entsprechend einer Schaltfrequenz fs gleich 37,6 kHz. Die maximale Spannung $U_{C2}$ beträgt 409,8 V. Die On-Verluste und Schaltverluste nach den Daten in Tabelle 1 betragen, bezogen auf die Daten in Tabelle 2, 65 Prozent bzw. 76 Prozent.

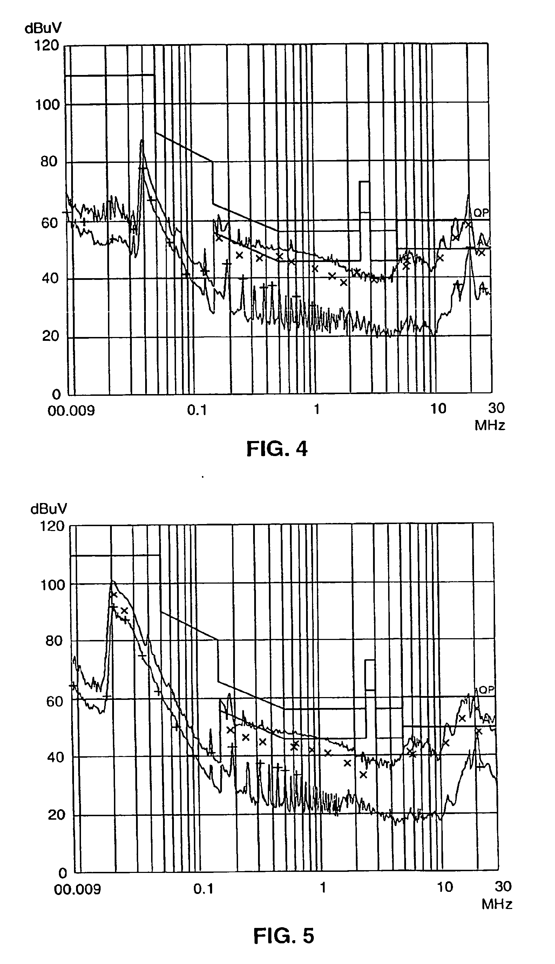

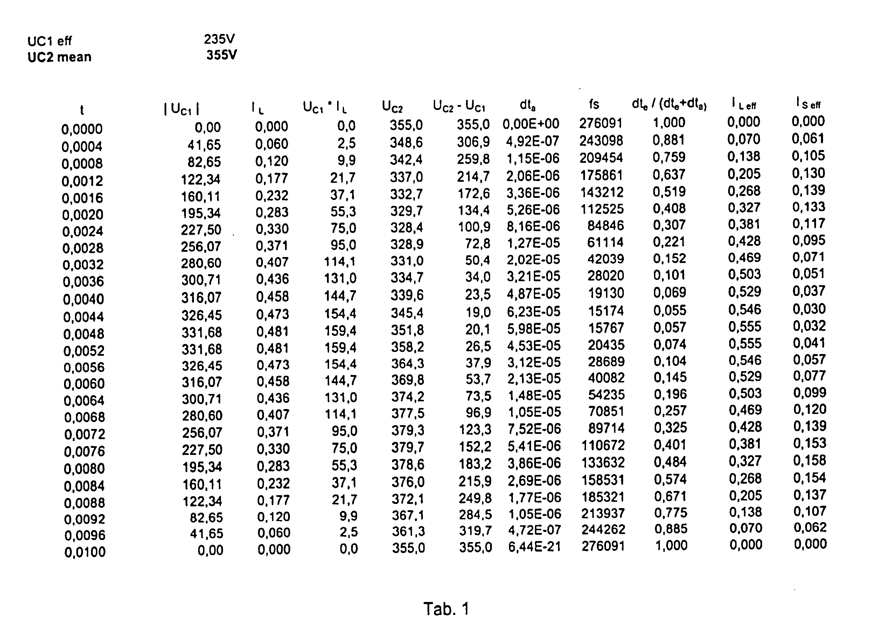

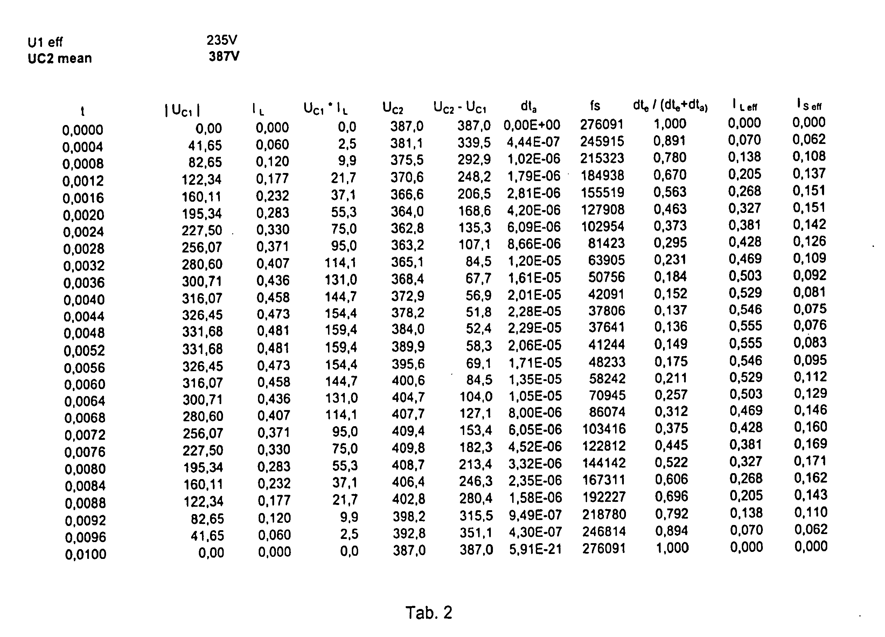

Schließlich zeigen die Figuren 4 und 5 die Funkstörwerte der Schaltungsanordnung nach einem üblich dimensionierten Funkstörfilter gemessen nach EN55015, Figur 4 ohne Verwendung eines erfindungsgemäßen Hochsetzstellers und Dimensionierung auf ein mittleres $U_{C2}$ von 387 V, Figur 5 bei Verwendung eines erfindungsgemäßen Hochsetzstellers und Dimensionierung auf ein mittleres $U_{C2}$ von 350 V. Von den als Geradenstücke eingezeichneten Linien betrifft die jeweils obere die maßgebliche Norm für Peakmessungen, die jeweils untere die maßgebliche Linie für Averagemessungen. Von den gemessenen Linien betrifft die jeweils obere gemessene eine Peakmessung, die untere eine Averagemessung. Wie ganz deutlich zu erkennen, verschiebt sich in Figur 5, verglichen mit dem Spektrum von Figur 4, das Spektrum zu niederen Frequenzen, d. h. genau dorthin, wo die Norm viel Spielraum bietet, denn da erhöhen sich die gemessenen Spektralanteile. Dort, wo die Norm kritisch ist, sinken die Spektralanteile in unkritische Bereiche ab. Daraus resultieren geringe Probleme bei der Einhaltung von Vorschriften bei der Funkenstörung.

**Patentansprüche**

1. Hochsetzsteller mit Leistungsfaktorkorrektur mit

   - einem Eingang zum Anschluss einer Versorgungsspannung ($U_{C1}$), insbesondere einer gleichgerichteten Wechselspannung;
   - einer Induktivität (L), einer Diode (D) und einem Speicherkondensator (C2), die in serieller Anordnung zwischen den Eingang und den Ausgang gekoppelt sind, wobei am Ausgang die am Speicherkondensator (C2) abfallende Spannung ($U_{C2}$) bereitgestellt wird;
   - einem Schalter (S), der zwischen einen Verbindungspunkt zwischen Induktivität (L) und Diode (D) einerseits und ein Bezugspotential andererseits gekoppelt ist; und
   - einer Ansteuerschaltung (10) für den Schalter (S), die die Ein- und Ausschaltdauer ($dt_e$; $dt_a$) des Schalters (S) steuert;

   **dadurch gekennzeichnet,**
   **dass** die Ansteuerschaltung (10) ausgelegt ist, die Einschaltdauer ($dt_e$) des Schalters (S) in Abhängigkeit der Frei laufzeit ($dt_a$) der Induktivität (L) zu steuern.

2. Hochsetzsteller nach Anspruch 1,
   **dadurch gekennzeichnet,**
   **dass** die Ansteuerschaltung (10) weiterhin eine Vorrichtung (12) umfasst, um den Zeitpunkt zu ermitteln, zu dem der Strom ($I_L$) durch die Induktivität (L) den Wert Null erreicht hat.

**3.** Hochsetzsteller nach Anspruch 1 oder 2, **dadurch gekennzeichnet, dass** die Ansteuerschaltung (10) ausgelegt ist, die Einschaltdauer ($dt_e$) des Schalters (S) auf eine maximale Freilaufzeit ($dt_a$) zu regeln.

**4.** Verfahren zum Betreiben eines Hochsetzstellers mit Leistungsfaktorkorrektur, der einen Eingang zum Anschluss einer Versorgungsspannung ($U_{C1}$), insbesondere einer gleichgerichteten Wechselspannung aufweist, eine Induktivität (L), eine Diode (D) und einen Speicherkondensator (C2), die in serieller Anordnung zwischen den Eingang und den Ausgang gekoppelt sind, wobei am Ausgang die am Speicherkondensator (C2) abfallende Spannung ($U_{C2}$) bereitgestellt wird, und einen Schalter (S), der zwischen einen Verbindungspunkt zwischen Induktivität (L) und Diode (D) einerseits und ein Bezugspotential andererseits gekoppelt ist, folgende Schritte umfassend:

a) Ermitteln der Freilaufzeit ($dt_a$) der Induktivität (L);
b) Steuern der Einschaltzeit ($dt_e$) des Schalters (S) in Abhängigkeit der ermittelten Freilaufzeit ($dt_a$).

**5.** Elektronisches Vorschaltgerät zum Ansteuern mindestens einer elektrischen Lampe, welches einen Hochsetzsteller nach einem der Ansprüche 1 bis 3 aufweist.

**Claims**

**1.** Step-up converter having power factor correction, having

- an input for connection to a supply voltage ($U_{C1}$), in particular a rectified AC voltage;
- an inductor (L), a diode (D) and a storage capacitor (C2), which are coupled in a series arrangement between the input and the output, in which the voltage ($U_{C2}$) that is dropped across the storage capacitor (C2) is provided at the output;
- a switch (S), which is coupled between a junction point between the inductor (L) and the diode (D), on the one hand, and a reference potential, on the other hand; and
- a drive circuit (10) for the switch (S) which controls the times ($dt_e$; $dt_a$) for which the switch (S) remains closed and open;

**characterized in that** the drive circuit (10) is designed to control the time ($dt_e$) for which the switch (S) remains closed as a function of the freewheeling time ($dt_a$) of the inductor (L).

**2.** Step-up converter according to Claim 1, **characterized in that** the drive circuit (10) also has a device (12) for determining the point in time at which the current ($I_L$) through the inductor (L) has reached the value zero.

**3.** Step-up converter according to Claim 1 or 2, **characterized in that** the drive circuit (10) is designed to regulate the time ($dt_e$) for which the switch (S) remains closed to ensure a maximum freewheeling time ($dt_a$).

**4.** Method for operating a step-up converter having power factor correction, which has an input for connection to a supply voltage ($U_{C1}$), in particular a rectified AC voltage, an inductor (L), a diode (D) and a storage capacitor (C2), which are coupled in a series arrangement between the input and the output, in which the voltage ($U_{C2}$) that is dropped across the storage capacitor (C2) is provided at the output, and a switch (S), which is coupled between a junction point between the inductor (L) and the diode (D), on the one hand, and a reference potential, on the other hand, comprising the following steps:

a) determination of the freewheeling time ($dt_a$) of the inductor (L);
b) control of the time ($dt_e$) for which the switch (S) remains closed as a function of the determined freewheeling time ($dt_a$).

**5.** Electronic ballast for driving at least one electric lamp having a step-up converter according to one of Claims 1 to 3.

**Revendications**

**1.** Convertisseur survolteur avec correction de facteur de puissance, avec

- une entrée pour le raccordement d'une tension d'alimentation ($U_{C1}$), notamment d'une tension alternative redressée ;
- une inductance (L), une diode (D) et un condensateur de stockage (C2), qui sont branchés en série entre l'entrée et la sortie, la tension ($U_{C2}$) chutant au condensateur de stockage (C2) étant fournie à la sortie ;
- un interrupteur (S) qui est branché entre un point de liaison entre inductance (L) et diode (D) d'une part et un potentiel de référence d'autre part ; et
- un circuit de commande (10) qui est destiné à l'interrupteur (S) et qui commande la durée de connexion et de déconnexion ($dt_e$ ; $dt_a$) de l'interrupteur (S) ;

**caractérisé par le fait que** le circuit de commande (10) est conçu pour commander la durée de connexion ($dt_e$) de l'interrupteur (S) en fonction du temps de roue libre ($dt_a$) de l'inductance (L).

2. Convertisseur survolteur selon la revendication 1, **caractérisé par le fait que** le circuit de commande (10) comprend aussi un dispositif (12) pour déterminer l'instant auquel le courant ($I_L$) dans l'inductance (L) a atteint la valeur nulle.

3. Convertisseur survolteur selon la revendication 1 ou 2, **caractérisé par le fait que** le circuit de commande (10) est conçu pour régler la durée de connexion ($dt_e$) de l'interrupteur (S) sur un temps de roue libre maximal ($dt_a$).

4. Procédé pour faire fonctionner un convertisseur survolteur avec correction de facteur de puissance qui comporte une entrée pour le raccordement d'une tension d'alimentation ($U_{C1}$), notamment d'une tension alternative redressée, une inductance (L), une diode (D) et un condensateur de stockage (C2), qui sont branchés en série entre l'entrée et la sortie, la tension ($U_{C2}$) chutant au condensateur de stockage (C2) étant fournie à la sortie, et un interrupteur (S) qui est branché entre un point de liaison entre inductance (L) et diode (D) d'une part et un potentiel de référence d'autre part, lequel procédé comprend les étapes suivantes :

   a) détermination du temps de roue libre ($dt_a$) de l'inductance (L) ;
   b) commande de la durée de connexion ($dt_e$) de l'interrupteur (S) en fonction du temps de roue libre déterminé ($dt_a$).

5. Ballast électronique pour la commande d'au moins une lampe électrique, lequel comporte un convertisseur survolteur selon l'une des revendications 1 à 3.

**FIG. 1**

**FIG. 2**

$$\frac{\delta I_L}{\delta t} \sim \frac{U_{C1}}{L} \qquad \frac{\delta I_L}{\delta t} \sim \frac{U_{C2} - U_{C1}}{L}$$

$$dt_a \sim \hat{I}_L \cdot \frac{L}{(U_{C2} - U_{C1})}$$

**FIG. 3**

**FIG. 4**

**FIG. 5**

UC1 eff     235V
UC2 mean     **355V**

| t | $|U_{C1}|$ | $I_L$ | $U_{C1} \cdot I_L$ | $U_{C2}$ | $U_{C2} - U_{C1}$ | $dt_a$ | fs | $dt_e / (dt_e + dt_a)$ | $I_{L\,eff}$ | $I_{s\,eff}$ |
|---|---|---|---|---|---|---|---|---|---|---|
| 0,0000 | 0,00 | 0,000 | 0,0 | 355,0 | 355,0 | 0,00E+00 | 276091 | 1,000 | 0,000 | 0,000 |
| 0,0004 | 41,65 | 0,060 | 2,5 | 348,6 | 306,9 | 4,92E-07 | 243098 | 0,881 | 0,070 | 0,061 |
| 0,0008 | 82,65 | 0,120 | 9,9 | 342,4 | 259,8 | 1,15E-06 | 209454 | 0,759 | 0,138 | 0,105 |
| 0,0012 | 122,34 | 0,177 | 21,7 | 337,0 | 214,7 | 2,06E-06 | 175861 | 0,637 | 0,205 | 0,130 |
| 0,0016 | 160,11 | 0,232 | 37,1 | 332,7 | 172,6 | 3,36E-06 | 143212 | 0,519 | 0,268 | 0,139 |
| 0,0020 | 195,34 | 0,283 | 55,3 | 329,7 | 134,4 | 5,26E-06 | 112525 | 0,408 | 0,327 | 0,133 |
| 0,0024 | 227,50 | 0,330 | 75,0 | 328,4 | 100,9 | 8,16E-06 | 84846 | 0,307 | 0,381 | 0,117 |
| 0,0028 | 256,07 | 0,371 | 95,0 | 328,9 | 72,8 | 1,27E-05 | 61114 | 0,221 | 0,428 | 0,095 |
| 0,0032 | 280,60 | 0,407 | 114,1 | 331,0 | 50,4 | 2,02E-05 | 42039 | 0,152 | 0,469 | 0,071 |
| 0,0036 | 300,71 | 0,436 | 131,0 | 334,7 | 34,0 | 3,21E-05 | 28020 | 0,101 | 0,503 | 0,051 |
| 0,0040 | 316,07 | 0,458 | 144,7 | 339,6 | 23,5 | 4,87E-05 | 19130 | 0,069 | 0,529 | 0,037 |
| 0,0044 | 326,45 | 0,473 | 154,4 | 345,4 | 19,0 | 6,23E-05 | 15174 | 0,055 | 0,546 | 0,030 |
| 0,0048 | 331,68 | 0,481 | 159,4 | 351,8 | 20,1 | 5,98E-05 | 15767 | 0,057 | 0,555 | 0,032 |
| 0,0052 | 331,68 | 0,481 | 159,4 | 358,2 | 26,5 | 4,53E-05 | 20435 | 0,074 | 0,555 | 0,041 |
| 0,0056 | 326,45 | 0,473 | 154,4 | 364,3 | 37,9 | 3,12E-05 | 28689 | 0,104 | 0,546 | 0,057 |
| 0,0060 | 316,07 | 0,458 | 144,7 | 369,8 | 53,7 | 2,13E-05 | 40082 | 0,145 | 0,529 | 0,077 |
| 0,0064 | 300,71 | 0,436 | 131,0 | 374,2 | 73,5 | 1,48E-05 | 54235 | 0,196 | 0,503 | 0,099 |
| 0,0068 | 280,60 | 0,407 | 114,1 | 377,5 | 96,9 | 1,05E-05 | 70851 | 0,257 | 0,469 | 0,120 |
| 0,0072 | 256,07 | 0,371 | 95,0 | 379,3 | 123,3 | 7,52E-06 | 89714 | 0,325 | 0,428 | 0,139 |
| 0,0076 | 227,50 | 0,330 | 75,0 | 379,7 | 152,2 | 5,41E-06 | 110672 | 0,401 | 0,381 | 0,153 |
| 0,0080 | 195,34 | 0,283 | 55,3 | 378,6 | 183,2 | 3,86E-06 | 133632 | 0,484 | 0,327 | 0,158 |
| 0,0084 | 160,11 | 0,232 | 37,1 | 376,0 | 215,9 | 2,69E-06 | 158531 | 0,574 | 0,268 | 0,154 |
| 0,0088 | 122,34 | 0,177 | 21,7 | 372,1 | 249,8 | 1,77E-06 | 185321 | 0,671 | 0,205 | 0,137 |
| 0,0092 | 82,65 | 0,120 | 9,9 | 367,1 | 284,5 | 1,05E-06 | 213937 | 0,775 | 0,138 | 0,107 |
| 0,0096 | 41,65 | 0,060 | 2,5 | 361,3 | 319,7 | 4,72E-07 | 244262 | 0,885 | 0,070 | 0,062 |
| 0,0100 | 0,00 | 0,000 | 0,0 | 355,0 | 355,0 | 6,44E-21 | 276091 | 1,000 | 0,000 | 0,000 |

Tab. 1

| U1 eff | 235V |
|---|---|
| UC2 mean | 387V |

| t | $|U_{C1}|$ | $I_L$ | $U_{C1} \cdot I_L$ | $U_{C2}$ | $U_{C2} - U_{C1}$ | $dt_a$ | fs | $dt_e / (dt_e + dt_a)$ | $I_{L\,eff}$ | $I_{s\,eff}$ |
|---|---|---|---|---|---|---|---|---|---|---|
| 0,0000 | 0,00 | 0,000 | 0,0 | 387,0 | 387,0 | 0,00E+00 | 276091 | 1,000 | 0,000 | 0,000 |
| 0,0004 | 41,65 | 0,060 | 2,5 | 381,1 | 339,5 | 4,44E-07 | 245915 | 0,891 | 0,070 | 0,062 |
| 0,0008 | 82,65 | 0,120 | 9,9 | 375,5 | 292,9 | 1,02E-06 | 215323 | 0,780 | 0,138 | 0,108 |
| 0,0012 | 122,34 | 0,177 | 21,7 | 370,6 | 248,2 | 1,79E-06 | 184938 | 0,670 | 0,205 | 0,137 |
| 0,0016 | 160,11 | 0,232 | 37,1 | 366,6 | 206,5 | 2,81E-06 | 155519 | 0,563 | 0,268 | 0,151 |
| 0,0020 | 195,34 | 0,283 | 55,3 | 364,0 | 168,6 | 4,20E-06 | 127908 | 0,463 | 0,327 | 0,151 |
| 0,0024 | 227,50 | 0,330 | 75,0 | 362,8 | 135,3 | 6,09E-06 | 102954 | 0,373 | 0,381 | 0,142 |
| 0,0028 | 256,07 | 0,371 | 95,0 | 363,2 | 107,1 | 8,66E-06 | 81423 | 0,295 | 0,428 | 0,126 |
| 0,0032 | 280,60 | 0,407 | 114,1 | 365,1 | 84,5 | 1,20E-05 | 63905 | 0,231 | 0,469 | 0,109 |
| 0,0036 | 300,71 | 0,436 | 131,0 | 368,4 | 67,7 | 1,61E-05 | 50756 | 0,184 | 0,503 | 0,092 |
| 0,0040 | 316,07 | 0,458 | 144,7 | 372,9 | 56,9 | 2,01E-05 | 42091 | 0,152 | 0,529 | 0,081 |
| 0,0044 | 326,45 | 0,473 | 154,4 | 378,2 | 51,8 | 2,28E-05 | 37806 | 0,137 | 0,546 | 0,075 |
| 0,0048 | 331,68 | 0,481 | 159,4 | 384,0 | 52,4 | 2,29E-05 | 37641 | 0,136 | 0,555 | 0,076 |
| 0,0052 | 331,68 | 0,481 | 159,4 | 389,9 | 58,3 | 2,06E-05 | 41244 | 0,149 | 0,555 | 0,083 |
| 0,0056 | 326,45 | 0,473 | 154,4 | 395,6 | 69,1 | 1,71E-05 | 48233 | 0,175 | 0,546 | 0,095 |
| 0,0060 | 316,07 | 0,458 | 144,7 | 400,6 | 84,5 | 1,35E-05 | 58242 | 0,211 | 0,529 | 0,112 |
| 0,0064 | 300,71 | 0,436 | 131,0 | 404,7 | 104,0 | 1,05E-05 | 70945 | 0,257 | 0,503 | 0,129 |
| 0,0068 | 280,60 | 0,407 | 114,1 | 407,7 | 127,1 | 8,00E-06 | 86074 | 0,312 | 0,469 | 0,146 |
| 0,0072 | 256,07 | 0,371 | 95,0 | 409,4 | 153,4 | 6,05E-06 | 103416 | 0,375 | 0,428 | 0,160 |
| 0,0076 | 227,50 | 0,330 | 75,0 | 409,8 | 182,3 | 4,52E-06 | 122812 | 0,445 | 0,381 | 0,169 |
| 0,0080 | 195,34 | 0,283 | 55,3 | 408,7 | 213,4 | 3,32E-06 | 144142 | 0,522 | 0,327 | 0,171 |
| 0,0084 | 160,11 | 0,232 | 37,1 | 406,4 | 246,3 | 2,35E-06 | 167311 | 0,606 | 0,268 | 0,162 |
| 0,0088 | 122,34 | 0,177 | 21,7 | 402,8 | 280,4 | 1,58E-06 | 192227 | 0,696 | 0,205 | 0,143 |
| 0,0092 | 82,65 | 0,120 | 9,9 | 398,2 | 315,5 | 9,49E-07 | 218780 | 0,792 | 0,138 | 0,110 |
| 0,0096 | 41,65 | 0,060 | 2,5 | 392,8 | 351,1 | 4,30E-07 | 246814 | 0,894 | 0,070 | 0,062 |
| 0,0100 | 0,00 | 0,000 | 0,0 | 387,0 | 387,0 | 5,91E-21 | 276091 | 1,000 | 0,000 | 0,000 |

Tab. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1040411 A1

- WO 0169984 A2